# EUROPEAN PATENT APPLICATION

(11) **EP 2 908 588 A1**
(43) Date of publication of application: **19.08.2015**
(21) Application number: 13846004.3
(22) Date of filing: 09.08.2013
(51) Int. Cl.: H04W 72/04

(54) **UN SUB-FRAME CONFIGURATION METHOD AND DEVICE**

(30) Priority: 10.10.2012 CN 201210382081
(71) Applicant: ZTE Corporation, Shenzhen, Guangdong 518057 (CN)
(72) Inventor: GAO, Yin, Shenzhen Guangdong 518057 (CN); XIE, Feng, Shenzhen Guangdong 518057 (CN); HUANG, Ying, Shenzhen Guangdong 518057 (CN); WU, Yunlu, Shenzhen Guangdong 518057 (CN); CHU, Li, Shenzhen Guangdong 518057 (CN); LIU, Yulan, Shenzhen Guangdong 518057 (CN)
(74) Representative: Chimini, Francesco
(86) International application number: PCT/CN2013/081212
(87) International publication number: WO 2014/056343

(57) **Abstract**

The present invention discloses a method and device for configuring a Un subframe. The method comprises: if a MR moves between multiple DeNBs, a message sent from a source DeNB to a target DeNB carries the Un subframe configuration information of the MR. The present invention solves the problem that it is unable to acquire effective and accurate Un subframe configuration information fast when the MR moves between the DeNBs is solved, thereby achieving the effect of acquiring the effective and accurate Un subframe configuration information fast.

## Description

### Technical Field

The present invention relates to the field of communications, in particular to a method and device for configuring a Un subframe.

### Background

In order to keep the 3rd generation mobile communication system competitive in the field of communications, the 3rd Generation Partnership Project (3GPP) standard working group is working on the study of the Evolved Packet System (EPS). The whole EPS mainly includes an Evolved Universal Terrestrial Radio Access Network (E-UTRAN) and an Evolved Packet Core (EPC) network. The EPC network of the system can support the access of a user from a Global System for Mobile Communication (GSM)/Enhanced Data Rate For GSM Evolution (EDGE) Radio Access Network (GERAN) and Universal Terrestrial Radio Access Network (UTRAN).

The EPC network includes a Home Subscriber Server (HSS), a Mobility Management Entity (MME), a Serving Gateway (S-GW), a PDN Gateway (P-GW), a Serving General Packet Radio Service Support Node (SGSN) and a Policy and Charging Enforcement Function (PCRF) entity, wherein
the HSS is a permanent storage site for subscriber data and is located in a home network for a subscriber;
the MME is a storage site for subscriber data in the current network and is responsible for the signaling management from a terminal to a network Non-Access Stratum (NAS), the tracking and paging management functions in the idle mode of a user and the bearer management;
the S-GW is a gateway from a core network to a radio system and is responsible for the user plane bearer from the terminal to the core network, the data caching in the idle mode of the terminal, the function of initiating a service request from a network side, legal interception and packet data routing and forwarding function;
the P-GW is a gateway of an Evolved Packet System (EPS) and an external network of the system, and is responsible for the IP address allocation of the terminal, charging, packet filtering, policy application and other functions;
the SGSN is a service support point for a GERAN user and a UTRAN user to access the EPC network, and is functionally similar to the MME, namely, it is responsible for the location updating, paging management, bearer management and other functions for the user, and
the PCRF is responsible for providing the PCEF with a policy control and charging rule.

In some scenarios, in order to expand the radio coverage range or temporarily increase the capability of the wireless accessing user, the concept of a Relay Node (RN) is introduced. The network architecture includes the following network elements:
an RN, which has two functions: User Equipment (UE) and RN, wherein in one aspect, the RN accesses the network as the UE; and in another aspect, the RN serves as an eNB for the access of the UE;
a Donor eNodeB (DeNB), which provides the RN with radio access and terminates the Radio Resource Control (RRC) signaling of RN-UE, the S1AP signaling and X2 signalling of RN-eNB, and builds-in SGW and PGW of the RN-UE at the same time ; and
a Relay Node Operator and Management (RNOAM) system, which is configured for the RN to acquire necessary connection information therefrom.

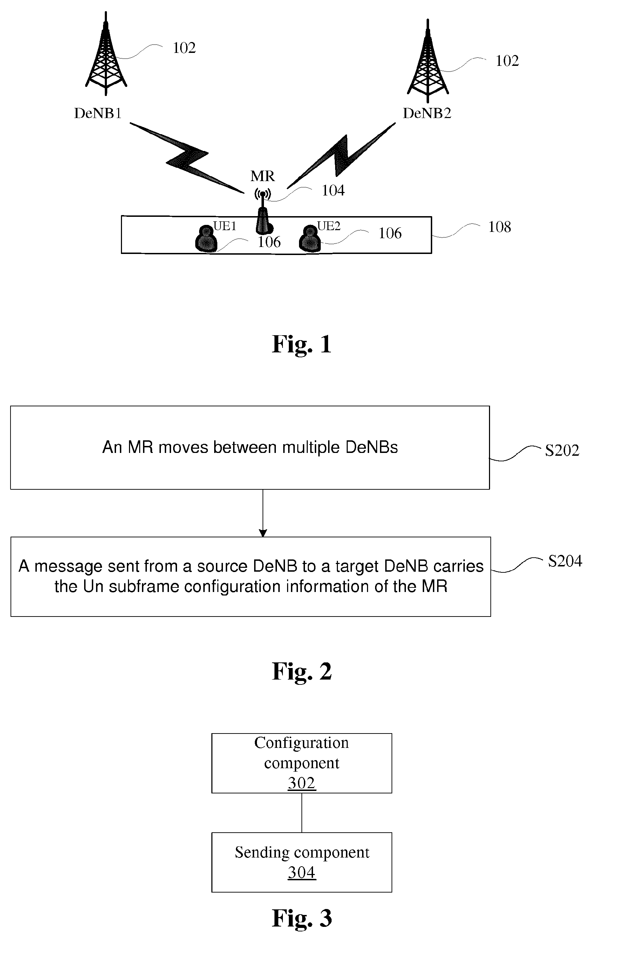

The main objective of deploying the architecture of the operator is to expand the coverage range of a base station in some places where wired connection is not convenient to deploy by deploying an RN, such as some remote undeveloped areas or a big emergent conference or match. In such scenario, the RN is generally immobile. However, with the application of the RN, the operator starts considering to apply the technology to a wider scenario, such as a high-speed railway, where a lot of wired communication facilities need to be deployed along the line due to the high-speed movement of the train, which increases the deployment cost of the operator greatly; and the wireless link between the RN and the DeNB can reduce the cost. Accordingly, favoured by the operator, such equipment is called Mobile Relay (MR). Fig. 1 is a diagram showing the deployment scenario of an MR according to the related arts. As shown in Fig. 1, an MR 104 is arranged on a high-speed train 108, and the UE 106 of the user in the train 108 communicates with a DeNB 102 through the MR 104.

To avoid self-interruption, generally, the RN cannot send and receive a signal in the same frequency band so that it generally contains two parts: a control part, which is configured to send a signal to a terminal, and a data part, which is configured to receive a signal from a base station. Therefore, a Un subframe needs to be transmitted between two Un ports. For an inband relay which needs to work in a time-division half-duplex mode, the DeNB and the RN cannot work normally unless the Un subframe is configured properly. At present, the DeNB may activate the configuration of the Un subframe through an RRC message. Meanwhile, the DeNB can acquire some default Un subframe configuration sets from Operation & Maintenance (O&M), and selects a proper Un subframe configuration according to the Un or Uu interface resources mastered by the DeNB. However, how to ensure the fast acquisition of effective and accurate Un subframe configuration information when the MN moves between multiple DeNBs needs to be solved.

Now, there is still no effective solution to solve the problem of how to ensure the fast acquisition of effective and accurate Un subframe configuration information when the MN moves between multiple DeNBs in the related arts.

### Summary

The embodiments of the present invention provide a method and device for configuring a Un subframe, in order to at least solve the problem.

In one aspect, an embodiment of the present invention provides a method for configuring a Un subframe, including: if an MR moves between multiple DeNBs, a message sent from a source DeNB to a target DeNB carries Un subframe configuration information of the MR.

Preferably, the step that the message sent from the source DeNB to the target DeNB carries the Un subframe configuration information of the MR includes that: when determining that the MR needs handover, the source DeNB selects a proper target DeNB for the MR and sends a handover request message to the target DeNB, wherein the handover request message carries the Un subframe configuration information.

Preferably, the step that the message sent from the source DeNB to the target DeNB carries the Un subframe configuration information of the MR includes that: if the target DeNB runs only when the MR passes, the source DeNB sends a cell wakeup message to the target DeNB, wherein the cell wakeup message carries the Un subframe configuration information of at least one MR of the source DeNB.

Preferably, the step that the message sent from the source DeNB to the target DeNB carries the Un subframe configuration information of the MR includes that: when an X2 interface or an S1 interface is established between the source DeNB and the target DeNB, an X2 or S1 interface establishment request message and/or an X2 or S1 interface establishment response message carry/carries the Un subframe configuration information of at least one MR of the source DeNB or the target DeNB.

Preferably, the step that the message sent from the source DeNB to the target DeNB carries the Un subframe configuration information of the MR includes that: when the Un subframe configuration information or the cell configuration information of the at least one serving MR of the source DeNB changes, the source DeNB sends a base station configuration update message to the target DeNB, wherein the base station configuration update message carries the Un subframe configuration information of the at least one MR of the source DeNB.

Preferably, the cell wakeup message, the interface establishment request message, the interface establishment response message or the base station configuration update message further carries the unique identifying information of the MR, wherein the unique identifying information of the MR includes a device name, International Mobile Subscriber Identity (IMSI) information, and/or the E-UTRAN Cell Global Identifier (ECGI) information of the MR.

Preferably, the message, the handover request message, the cell wakeup message or the base station configuration update message is sent through an X2 interface or an S1 interface.

Preferably, after the source DeNB sends the message to the target DeNB, the method may further include that: after receiving the message from the source DeNB, the target DeNB sends the corresponding Un subframe configuration information of the current MR to the current MR according to the Un subframe configuration information carried in the message.

In another aspect, the present invention provides a device for configuring a Un subframe, including a configuration component, which is configured to send a message to a target DeNB if an MR moves between multiple DeNBs, wherein the message carries the Un subframe configuration information of the MR.

Preferably, the configuration component is configured to, when the source DeNB determines that the current MR needs handover, select a proper target DeNB for the current MR and send a handover request message to the target DeNB, wherein the handover request message carries the Un subframe configuration information.

Preferably, the configuration component is configured to, if the target DeNB runs only when the MR passes, send a cell wakeup message to the target DeNB, wherein the cell wakeup message carries the Un subframe configuration information of at least one MR of the source DeNB.

Preferably, the configuration component is configured to, when an X2 interface or an S1 interface is established between the source DeNB and the target DeNB, carry the Un subframe configuration information of at least one MR of the source DeNB or the target DeNB in an X2 or S1 interface establishment request message and/or an X2 or S1 interface establishment response message.

Preferably, the configuration component is configured to, when the Un subframe configuration information or the cell configuration information of at least one serving MR of the source DeNB changes, send a base station configuration update message to the target DeNB, wherein the base station configuration update message carries the Un subframe configuration information of at least one MR of the source DeNB.

Preferably, the configuration component may be further configured to configure the unique identifying information of the MR in the cell wakeup message, the interface establishment request message, the interface establishment response message or the base station configuration update message, wherein the unique identifying information of the MR includes the device name, the IMSI information, and/or the ECGI information of the MR.

Preferably, the device may further include: a sending component, which is configured to send the corresponding Un subframe configuration information of the current MR to the current MR according to the Un subframe configuration information carried in the message after the target DeNB receives the message from the source DeNB.

Through the present invention, when the MR moves between multiple DeNBs, the message sent from the source DeNB to the target DeNB carries the Un subframe configuration information of the MR, so that the problem that the target DeNB cannot acquire effective and accurate Un subframe configuration information fast when the MR moves between multiple DeNBs is solved, thereby achieving the effect of acquiring the effective and accurate Un subframe configuration information fast.

### Brief Description of the Drawings

The drawings illustrated here are to provide further understanding of the present invention and constitute one part of the application, and the exemplary embodiments of the present invention and the explanations thereof are intended to explain the present invention, instead of improperly limiting the present invention. In the drawings:
Fig. 1 is a diagram showing a deployment scenario of an MR according to the related arts;
Fig. 2 is a flowchart of a method for configuring a Un subframe according to an embodiment of the present invention;
Fig. 3 is a block diagram showing a structure of a device for configuring a Un subframe according to an embodiment of the present invention;
Fig. 4 is a first flowchart of a method for configuring a Un subframe according to a preferred embodiment of the present invention;
Fig. 5 is a second flowchart of a method for configuring a Un subframe according to a preferred embodiment of the present invention;
Fig. 6 is a third flowchart of a method for configuring a Un subframe according to an embodiment of the present invention; and
Fig. 7 is a fourth flowchart of a method for configuring a Un subframe according to an embodiment of the present invention.

### Detailed Description of the Embodiments

The embodiments of the present invention will be described below in reference to the drawings and the embodiments in detail. It should be noted that, in the case of no conflict, the embodiments of the application and features therein can be combined with each other.

### First embodiment

The embodiment of the present invention provides a method for configuring a Un subframe. Fig. 2 is a flowchart of the method for configuring a Un subframe according to an embodiment of the present invention. As shown in Fig. 2, the flow includes the following steps.

Step 202: An MR moves between multiple DeNBs.

Step 204: A message sent from a source DeNB to a target DeNB carries Un subframe configuration information of the MR.

Through the steps, the practice that the Un subframe information of the MR is not carried in the message sent from the source DeNB to the target DeNB in the related arts is changed, and the problem that it is unable to acquire effective and accurate Un subframe configuration information fast when the MR moves between the DeNBs is solved, thereby achieving the effect of acquiring the effective and accurate Un subframe configuration information fast.

The Un subframe configuration information of the MR may be carried in the message sent from the source DeNB to the target DeNB in various ways, preferably in one of the following four ways:
when determining that the current MR needs handover, the source DeNB selects a proper target DeNB for the current MR and sends a handover request message to the target DeNB, wherein the handover request message carries the Un subframe configuration information;
if the target DeNB runs only when the MR passes the target DeNB, the source DeNB sends a cell wakeup message to the target DeNB, wherein the cell wakeup message carries the Un subframe configuration information of at least one MR of the source DeNB;
when an X2 interface or an S1 interface is established between the source DeNB and the target DeNB, an X2 or S1 interface establishment request message and/or an X2 or S1 interface establishment response message carries the Un subframe configuration information of at least one MR of the source DeNB or the target DeNB; and
when the Un subframe configuration information or the cell configuration information of at least one MR, which is serving, of the source DeNB changes, the source DeNB sends a base station configuration update message to the target DeNB, wherein the base station configuration update message carries the Un subframe configuration information of at least one MR of the source DeNB.

Through the four preferred ways above, the Un subframe configuration information of the MR may be carried in the handover request message, the cell wakeup message, the establishment request message, the establishment response message or the base station configuration update message sent from the source DeNB to the target DeNB, so that the target DeNB may acquire the Un subframe configuration information of the MR fast.

Besides the Un subframe configuration information of the MR, the four specific messages above may further carry a unique identifying information of the MR, wherein the unique identifying information of the MR includes a device name, IMSI information, and/or ECGI information of the MR. By carrying the unique identifying information of the MR, the target DeNB may send the Un subframe configuration information of the MR to the MR according to the unique identifying information of the MR.

The handover request message, the cell wakeup message or the base station configuration update message may be sent through various interfaces, preferably through an X2 interface or an S1 interface.

After receiving the message from the source DeNB, the target DeNB sends the corresponding Un subframe configuration information of the current MR to the current MR according to the Un subframe configuration information carried in the message. Through the steps above, it is able to acquire effective and accurate Un subframe configuration information fast, which is favourable for optimizing the handover of the MR and improving the network performance.

### Second embodiment

An embodiment of the present invention provides a device for configuring a Un subframe, which is configured to implement the embodiments and the preferred embodiments above, thereby needing no further description. As below, the term "component" can implement the combination of software and/or hardware of predetermined functions. Although the device described in the following embodiments is preferably implemented by software, the implementation of hardware or the combination of the software and hardware can also be composed.

Fig. 3 is a block diagram showing a structure of a device for configuring a Un subframe according to an embodiment of the present invention. As shown in Fig. 3, the device includes a configuration component 302.

The configuration component 302 is configured to send a message to a target DeNB if an MR moves between multiple DeNBs, wherein the message carries Un subframe configuration information of the MR.

Preferably, the configuration component 302 is configured to, when the source DeNB determines that the current MR needs handover, select a proper target DeNB for the current MR and send a handover request message to the target DeNB, wherein the handover request message carries the Un subframe configuration information.

Preferably, the configuration component 302 is configured to, if the target DeNB runs only when the MR passes the target DeNB, send a cell wakeup message to the target DeNB, wherein the cell wakeup message carries the Un subframe configuration information of at least one MR of the source DeNB.

Preferably, the configuration component 302 is configured to, when an X2 interface or an S1 interface is established between the source DeNB and the target DeNB, carry the Un subframe configuration information of at least one MR of the source DeNB or the target DeNB in an X2 or S1 interface establishment request message and/or an X2 or S1 interface establishment response message.

Preferably, the configuration component 302 is configured to, when the Un subframe configuration information or the cell configuration information of at least one serving MR of the source DeNB changes, send a base station configuration update message to the target DeNB, wherein the base station configuration update message carries the Un subframe configuration information of at least one MR of the source DeNB.

Preferably, the configuration component 302 may be further configured to configure unique identifying information of the MR in the cell wakeup message, the interface establishment request message, the interface establishment response message or the base station configuration update message, wherein the unique identifying information of the MR includes a device name, IMSI information, and/or the ECGI information of the MR.

Preferably, the device may further include: a sending component 304, which is configured to send the corresponding Un subframe configuration information of the current MR to the current MR according to the Un subframe configuration information carried in the message after the target DeNB receives the message from the source DeNB.

### Third embodiment

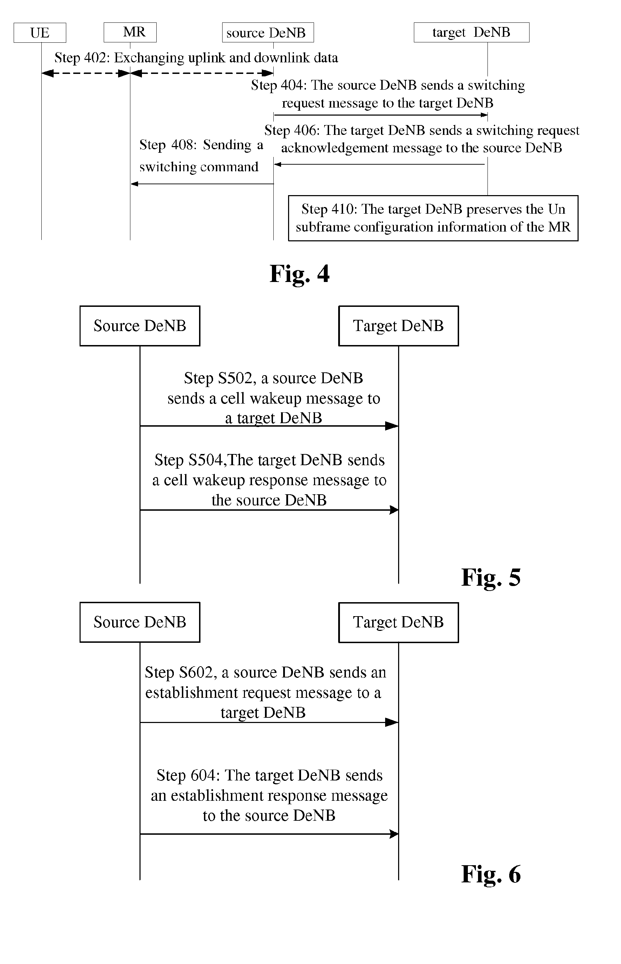

Fig. 4 is a first flowchart of a method for configuring a Un subframe according to a preferred embodiment of the present invention. As shown in Fig. 4, the flow includes the following steps that:
Step 402: A UE exchanges uplink and downlink data with a source DeNB through an MR.
Step 404: The source DeNB sends a handover request message to a target DeNB.

When determining that the current MR needs handover, the source DeNB selects a proper target DeNB for the current MR and sends a handover request message to the target DeNB, wherein the handover request message carries the current Un subframe configuration information of the MR. Specifically, the information contained in a transparent packet of the handover request sent from the source DeNB to the target DeNB includes an Access Stratum (AS), a secret key, Radio Resource Management (RRM) configuration information, and the current Un subframe configuration information of the MR. The source DeNB is a DeNB in which the current MR is located, and the target DeNB is adjacent to the source DeNB and is a DeNB to which the current MR is to hand over.

Step 406: The target DeNB sends a Handover Request Acknowledge to the source DeNB.

After receiving the handover request, the target DeNB prepares the resources required by the handover and sends a Handover Request Acknowledge to the source DeNB after completing the preparation.

Step 408: The source DeNB sends a handover command to the MR.

After receiving the Handover Request Acknowledgment, the source DeNB sends the handover command to the MR through an air interface.

Step 410: The target DeNB preserves the Un subframe configuration information of the MR.

After handing over to the target DeNB, the MR may continue using the current Un subframe configuration, and meanwhile, the target DeNB continues preserving the Un subframe configuration information of the MR sent from the source DeNB, thereby ensuring that the Un subframe configuration information between the target DeNB and the MR is consistent.

### Fourth embodiment

When the DeNB makes an energy-saving decision locally, the dormant state cannot be enabled unless the MR user in the current cell is moved and other common users may hand over to other cells, for example, the DeNB is under the coverage of other macro cells. The movement of the MR is accurate in direction, which is different from that of a common user. At present, the handover flow of the MR is the same as that of the common user, so the handover request message may carry historical cell information. The source DeNB may judge the movement direction of the MR according to the UE historical information of the MR, and wakes up the target DeNB before the MR hands over.

Specifically, provided that the DeNB along the railway runs only when the MR passes, the Un subframe configuration information may be carried when the DeNB where the MR is located now, i.e., the source DeNB, wakes up the adjacent next DeNB, i.e., the target DeNB, through an X2 interface. The source DeNB transmits the Un subframe configuration information to the target DeNB through a cell wakeup message, wherein the cell wakeup message contains the related information of the MR, including the unique identifying information of the MR, such as a device name, IMSI information, and/or ECGI information, and the Un subframe configuration information of the MR.

Fig. 5 is a second flowchart of a method for configuring a Un subframe according to a preferred embodiment of the present invention. As shown in Fig. 5, the flow includes the following steps.

Step 502: A source DeNB sends a cell wakeup message to a target DeNB.

The cell wakeup message sent from the source DeNB to the target DeNB contains information that one or more cells to be waked up and related information of an MR, including unique identifying information of the MR, such as a device name, IMSI information, and/or ECGI information of the MR, and the Un subframe configuration information of the MR.

Step 504: The target DeNB sends a cell wakeup response message to the source DeNB.

After receiving the cell wakeup message, the target DeNB sends a cell wakeup acknowledgement message to the source DeNB if the processing is successful, and otherwise, sends a cell wakeup failure message to the source DeNB, wherein the cell wakeup failure message carries a failure reason.

### Fifth embodiment

When an X2 interface is established between a source DeNB and a target DeNB, the establishment request/response message through the X2 interface may carry the information of one or more serving MR of the current DeNB, including unique identifying information of the MR, such as the device name information, the IMSI information, and/or the ECGI information, and the Un subframe configuration information of the MR.

Fig. 6 is q third flowchart of a method for configuring a Un subframe according to an embodiment of the present invention. As shown in Fig. 6, the flow includes the following steps.

Step 602: A source DeNB sends an establishment request message to a target DeNB.

When an X2 interface is established between the source DeNB and the target DeNB, the source DeNB sends an X2 establishment request message to the target DeNB, wherein the message contains the information of all the serving cells of the source DeNB as well as the related information of the MR, including the unique identifying information of the MR, such as a device name, IMSI information, and/or ECGI information, and Un subframe configuration information of the MR.

Step 604: The target DeNB sends an establishment response message to the source DeNB.

After receiving the X2 establishment request message, the target DeNB sends an X2 establishment response message to the source DeNB if the establishment is successful, wherein the message contains the information of all the serving cells of the target DeNB as well as the related information of the MR, including unique identifying information of the MR, such as the device name information, the IMSI information, and/or the ECGI information, and the Un subframe configuration information of the MR. If the establishment is unsuccessful, the target DeNB sends an X2 establishment failure message to the source DeNB, wherein the message carries a failure reason.

### Sixth embodiment

When MRs of a source DeNB change, for example, a new MR is added or the MR is removed, the source DeNB sends a base station configuration update message to a target DeNB2, wherein the message carries the information of one or more serving MRs of the current DeNB, including the unique identifying information of the MR, such as a device name, IMSI information, and/or ECGI information, and Un subframe configuration information of the MR.

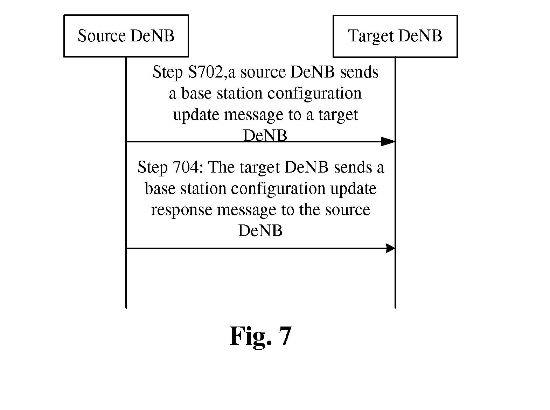

Fig. 7 is a fourth flowchart of a method for configuring a Un subframe according to an embodiment of the present invention. As shown in Fig. 7, the flow includes the following steps.

Step 702: A source DeNB sends a base station configuration update message to a target DeNB.

When the base station configuration information of the source DeNB changes, for example, the information of a serving cell or the adjacent cell information of a serving cell or the Un subframe configuration information of an MR changes, the source DeNB sends a base station configuration update message to the target DeNB, wherein the message contains the information of all the serving cells of the source DeNB as well as the related information of the MR, including unique identifying information of the MR, such as a device name information, IMSI information, and/or ECGI information, and Un subframe configuration information of the MR.

Step 704: The target DeNB sends a base station configuration update response message to the source DeNB.

After receiving the base station configuration update message, the target DeNB sends a base station configuration update acknowledgement message to the source DeNB if the processing is successful, and otherwise, sends a base station configuration failure message, wherein the base station configuration failure message carries a failure reason.

The handover request message, the handover response message, the base station configuration update message, the base station configuration response message, the cell wakeup message and the cell wakeup response message in the embodiment above may be sent by an X2 interface or an S1 interface.

As seen above, the embodiments of the present invention implement the following technical effects: the message between the source DeNB and the target DeNB carries the Un subframe configuration information, so that the target DeNB can send the Un subframe configuration information which is appropriate to the current MR more quickly and effectively after the MR moves to the target DeNB, which is favourable for optimizing the handover of the MR and improving the network performance and the user satisfaction.

Obviously, those skilled in the art shall understand that the components or steps of the present invention may be implemented by general computing apparatus and centralized in a single computing apparatus or distributed in a network consisting of multiple computing apparatus. Optionally, the components or steps may be implemented by program codes executable by the computing apparatus, so that they may be stored in a storage apparatus and executed by the computing apparatus, and, in some cases, the steps can be executed in a sequence different from the illustrated or described sequence, or they are respectively made into the integrated circuit components or many of them are made into a single integrated circuit component. Thereby, the embodiments of the present invention are not limited to any specific combination of hardware and software.

What said above are only the preferred embodiments of the present invention and not intended to limit the present invention. For those skilled in the art, various modifications and changes can be made in the present invention. Any modifications, equivalent replacements, improvements and the like within the spirit and principle of the present invention shall fall within the scope of protection of the present invention.

## Claims

1. A method for configuring a Un subframe, **characterized by** comprising:
based on that a Mobile Relay (MR) moves between multiple Donor eNodeBs (DeNBs), carrying the Un subframe configuration information of the MR in a message sent from a source DeNB to a target DeNB.

2. The method according to claim 1, **characterized in that** carrying the Un subframe configuration information of the MR in the message sent from the source DeNB to the target DeNB comprises:
when the source DeNB determines that the MR needs handover, the source DeNB selecting a proper target DeNB for the MR and sending a handover request message to the target DeNB, the handover request message carrying the Un subframe configuration information.

3. The method according to claim 1, **characterized in that** carrying the Un subframe configuration information of the MR in the message sent from the source DeNB to the target DeNB comprises:
based on that the target DeNB runs only when the MR passes, sending, by the source DeNB, a cell wakeup message to the target DeNB, the cell wakeup message carrying Un subframe configuration information of at least one MR of the source DeNB.

4. The method according to claim 1, **characterized in that** carrying the Un subframe configuration information of the MR in the message sent from the source DeNB to the target DeNB comprises:
when an X2 interface or an S1 interface is established between the source DeNB and the target DeNB, carrying the Un subframe configuration information of the at least one MR of the source DeNB or the target DeNB in an X2 or S1 interface establishment request message and/or in an X2 or S1 interface establishment response message.

5. The method according to claim 1, **characterized in that** carrying the Un subframe configuration information of the MR in the message sent from the source DeNB to the target DeNB comprises:
when the Un subframe configuration information or the cell configuration information of the at least one MR of the source DeNB changes, sending, by the source DeNB, a base station configuration update message to the target DeNB, the base station configuration update message carrying the Un subframe configuration information of the at least one MR of the source DeNB.

6. The method according to any one of claims 3 to 5, **characterized in that** the cell wakeup message, the interface establishment request message, the interface establishment response message or the base station configuration update message further carries unique identifying information of the MR; and the unique identifying information of the MR comprises a device name, and/or International Mobile Subscriber Identity (IMSI) information, and/or the E-UTRAN Cell Global Identifier (ECGI) information of the MR.

7. The method according to any one of claims 1, 2, 3 and 5, **characterized in that** the message, the handover request message, the cell wakeup message or the base station configuration update message is sent through an X2 interface or an S1 interface.

8. The method according to any one of claims 1 to 7, **characterized in that** after the source DeNB sends the message to the target DeNB, the method further comprises:
after the target DeNB receives the message from the source DeNB, sending, by the target DeNB, the corresponding Un subframe configuration information of the MR to the MR according to the Un subframe configuration information carried in the message.

9. A device for configuring a Un subframe, **characterized by** comprising:
a configuration component configured to send a message to a target DeNB if an MR moves between multiple DeNBs, wherein the message carries the Un subframe configuration information of the MR.

10. The device according to claim 9, **characterized in that** the configuration component is configured to, when the source DeNB determines that the MR needs handover, select a proper target DeNB for the MR and send a handover request message to the target DeNB, the handover request message carrying the Un subframe configuration information.

11. The device according to claim 9, **characterized in that** the configuration component is configured to, when the target DeNB runs only when the MR passes, send a cell wakeup message to the target DeNB, the cell wakeup message carrying Un subframe configuration information of at least one MR of the source DeNB.

12. The device according to claim 9, **characterized in that** the configuration component is configured to, when an X2 interface or an S1 interface is established between the source DeNB and the target DeNB, carry the Un subframe configuration information of the at least one MR of the source DeNB or the target DeNB in an X2 or S1 interface establishment request message and/or an X2 or S1 interface establishment response message.

13. The device according to claim 9, **characterized in that** the configuration component is configured to, when the Un subframe configuration information or the cell configuration information of the at least one MR of the source DeNB changes, send a base station configuration update message to the target DeNB, the base station configuration update message carrying the Un subframe configuration information of the at least one MR of the source DeNB.

14. The device according to any one of claims 11 to 13, **characterized in that** the configuration component may be further configured to configure unique identifying information of the MR in the cell wakeup message, the interface establishment request message, the interface establishment response message or the base station configuration update message, the unique identifying information of the MR comprising a device name, International Mobile Subscriber Identity (IMSI) information, and/or E-UTRAN Cell Global Identifier (ECGI) information of the MR.

15. The device according to any one of claims 9 to 14, **characterized by** further comprising:
a sending component configured to send the corresponding Un subframe configuration information of the MR to the MR according to the Un subframe configuration information carried in the message after the target DeNB receives the message from the source DeNB.
